# EUROPEAN PATENT APPLICATION

(11) **EP 4 821 775 A1**
(43) Date of publication of application: **14.10.2026**
(21) Application number: 24900007.6
(22) Date of filing: 06.12.2024
(51) Int. Cl.: B60W 20/20, B60W 20/40

(54) **MODE SWITCHING METHOD, APPARATUS AND SYSTEM, AND VEHICLE**

(30) Priority: 08.12.2023 CN 202311687833
(71) Applicant: Great Wall Motor Company Limited, Baoding, Hebei 071000 (CN)
(72) Inventor: CHANG, Xiao, Baoding, Hebei 071000 (CN); ZHENG, Yunlong, Baoding, Hebei 071000 (CN)
(74) Representative: Michalski Hüttermann & Partner mbB
(86) International application number: PCT/CN2024/137606
(87) International publication number: WO 2025/119374

(57) **Abstract**

Disclosed are a mode switching method, apparatus and system, and a vehicle, relating to the field of vehicle control technologies. The embodiments of the present disclosure, in response to a mode switch request for switching from a series mode to a direct drive mode, determine a target motor speed and a target motor torque of a first motor, and maintain a clutch in an engaged state and an engine in a driving state. The first motor may be regulated based on the target motor speed and the target motor torque. Then, when the transmission satisfies the shift condition, the transmission is controlled to switch to a target gear corresponding to the direct drive mode, so that a vehicle switches from the series mode to the direct drive mode. In the embodiment of the present disclosure, by regulating a speed and a torque of the first motor, disengagement and engagement of the clutch are avoided during a mode switching process. Furthermore, after the transmission completes a gear shift, the engine may quickly output torque without power interruption, thereby effectively improving a power response performance of the vehicle.

## Description

### CROSS-REFERENCE TO RELATED APPLICATIONS

This application claims priority to Chinese Patent Application No. 202311687833.5, filed with the China Patent Office on December 8, 2023, titled "MODE SWITCHING METHOD, APPARATUS AND SYSTEM, AND VEHICLE", the entire contents of which are incorporated herein by reference.

### TECHNICAL FIELD

The present disclosure generally relates to the field of vehicle control technologies, and in particular, to a mode switching method, apparatus and system, and a vehicle.

### BACKGROUND

With rapid development of automotive industry, in response to national policies on energy conservation, emission reduction, and carbon balance, traditional fuel vehicles are gradually transitioning towards Hybrid Electric Vehicles (HEVs). To adapt to different road conditions and driving demands, HEVs are typically equipped with multiple driving modes, including a series mode and a direct drive mode.

In the related art, when a driver depresses an accelerator pedal deeply for acceleration, the HEV switches from the series mode to the direct drive mode. At this time, the HEV needs to first disengage a clutch, then perform torque reduction and speed regulation operations on an engine, and after completing the torque reduction and speed regulation operations, re-engage the clutch to complete a mode switch. However, due to a process of disengaging and reengaging the clutch, the above-mentioned method not only results in a longer switching chain and a longer mode switching time but also suffers from engine power interruption and delayed power response, thereby affecting power response performance of the HEV.

### SUMMARY

The present disclosure provides a mode switching method, apparatus and system, and a vehicle to address a problem of poor overall vehicle power response performance during a switching process from series mode to direct drive mode in current Hybrid Electric Vehicles (HEVs).

To solve the above-mentioned problem, the present disclosure adopts the following technical solutions:
In a first aspect, an embodiment of the present disclosure provides a mode switching method including:
in response to a mode switch request for switching from a series mode to a direct drive mode, determining a target motor speed and a target motor torque of a first motor, and maintaining a clutch in an engaged state and an engine in a driving state; where the first motor is connected to the engine via the clutch;
based on the target motor speed and the target motor torque, regulating the first motor so that a transmission satisfies a shift condition; and
when the transmission satisfies the shift condition, controlling the transmission to switch to a target gear corresponding to the direct drive mode, so that a vehicle switches from the series mode to the direct drive mode.

In an embodiment of the present disclosure, the step of determining the target motor speed and the target motor torque of the first motor includes:
determining the target motor speed of the first motor based on a current wheel speed of a target wheel and a gear ratio between the target wheel and a transmission input shaft; and
determining a negative value of a current output torque of the engine as the target motor torque of the first motor.

In an embodiment of the present disclosure, the step of based on the target motor speed and the target motor torque, regulating the first motor so that the transmission satisfies the shift condition includes:
based on the target motor speed, performing speed regulation on a current motor speed of the first motor; and
when the current motor speed satisfies a torque regulation condition, based on the target motor torque, performing torque regulation on a current motor torque of the first motor, so that the transmission satisfies the shift condition.

In an embodiment of the present disclosure, the step of based on the target motor torque, performing torque regulation on the current motor torque of the first motor includes:
based on a fluctuation amplitude of the current output torque of the engine, performing real-time correction on the target motor torque to obtain a corrected target motor torque; and
based on the corrected target motor torque, performing torque regulation on the current motor torque of the first motor.

In an embodiment of the present disclosure, after the step of based on the target motor speed, performing speed regulation on the current motor speed of the first motor, the mode switching method further includes:
when a first speed difference between the target motor speed and the current motor speed is less than a first speed threshold, determining that the current motor speed satisfies the torque regulation condition.

In an embodiment of the present disclosure, after the step of based on the target motor torque, performing torque regulation on the current motor torque of the first motor, the mode switching method further includes:
when an absolute value of a sum of the current motor torque and the current output torque of the engine is less than a torque threshold, the first speed difference between the target motor speed and the current motor speed is less than a second speed threshold, and a duration of the first speed difference being less than the second speed threshold is greater than a time threshold, determining that the transmission satisfies the shift condition.

In an embodiment of the present disclosure, the mode switching method further includes:
when the first speed difference is less than the first speed threshold, controlling the transmission to perform a synchronizer pre-synchronisation operation to move a shift fork of a synchronizer to a target shift fork position.

In a second aspect, based on a same inventive concept, an embodiment of the present disclosure provides a mode switching apparatus including:

A parameter determination module, configured to, in response to a mode switch request for switching from a series mode to a direct drive mode, determine a target motor speed and a target motor torque of a first motor, and maintain a clutch in an engaged state and an engine in a driving state; where the first motor is connected to the engine via the clutch;
a motor regulation module, configured to, based on the target motor speed and the target motor torque, regulate the first motor so that a transmission satisfies a shift condition; and
a mode switching module, configured to, when the transmission satisfies the shift condition, control the transmission to switch to a target gear corresponding to the direct drive mode, so that a vehicle switches from the series mode to the direct drive mode.

In an embodiment of the present disclosure, the parameter determination module includes:
a motor speed determination sub-module, configured to determine the target motor speed of the first motor based on a current wheel speed of a target wheel and a gear ratio between the target wheel and a transmission input shaft; and
a motor torque determination sub-module, configured to determine a negative value of a current output torque of the engine as the target motor torque of the first motor.

In an embodiment of the present disclosure, the motor regulation module includes:
a speed regulation sub-module, configured to, based on the target motor speed, perform speed regulation on a current motor speed of the first motor; and
a torque regulation sub-module, configured to, when the current motor speed satisfies a torque regulation condition, based on the target motor torque, perform torque regulation on a current motor torque of the first motor, so that the transmission satisfies the shift condition.

In an embodiment of the present disclosure, the torque regulation sub-module includes:
a torque correction unit, configured to, based on a fluctuation amplitude of the current output torque of the engine, perform real-time correction on the target motor torque to obtain a corrected target motor torque; and
a torque regulation unit, configured to, based on the corrected target motor torque, perform torque regulation on the current motor torque of the first motor.

In an embodiment of the present disclosure, the mode switching apparatus further includes:
a torque regulation condition determination module, configured to, when a first speed difference between the target motor speed and the current motor speed is less than a first speed threshold, determine that the current motor speed satisfies the torque regulation condition.

In an embodiment of the present disclosure, the mode switching apparatus further includes:
a shift condition determination module, configured to when an absolute value of a sum of the current motor torque and the current output torque of the engine is less than a torque threshold, the first speed difference between the target motor speed and the current motor speed is less than a second speed threshold, and a duration of the first speed difference being less than the second speed threshold is greater than a time threshold, determine that the transmission satisfies the shift condition.

In an embodiment of the present disclosure, the mode switching apparatus further includes:
a synchronizer control module, configured to, when the first speed difference is less than the first speed threshold, control the transmission to perform a synchronizer pre-synchronisation operation to move a shift fork of a synchronizer to a target shift fork position.

In a third aspect, based on the same inventive concept, an embodiment of the present disclosure provides a mode switching system, including a vehicle control unit, a transmission control unit, a motor control unit, and an engine control unit; where
the vehicle control unit is configured to, in response to a mode switch request for switching from a series mode to a direct drive mode, determine a target motor speed and a target motor torque of a first motor, and send a clutch state maintenance request to the transmission control unit, and send an engine state maintenance request to the engine control unit;
the transmission control unit is configured to, in response to the clutch state maintenance request, maintain a clutch in an engaged state;
the engine control unit is configured to, in response to the engine state maintenance request, maintain an engine in a driving state; where the first motor is connected to the engine via the clutch;
the vehicle control unit is further configured to send a motor control request including the target motor speed and the target motor torque to the motor control unit;
the motor control unit is configured to, in response to the motor control request, based on the target motor speed and the target motor torque, regulate the first motor so that a transmission satisfies a shift condition;
the vehicle control unit is further configured to, when the transmission satisfies the shift condition, send a gear shift request to the transmission control unit; and
the transmission control unit is further configured to, in response to the gear shift request, control the transmission to switch to a target gear corresponding to the direct drive mode, so that a vehicle switches from the series mode to the direct drive mode.

In a fourth aspect, based on the same inventive concept, an embodiment of the present disclosure provides a vehicle including the mode switching system provided in the third aspect of the present disclosure.

The mode switching method provided by an embodiment of the present disclosure, may in response to a mode switch request for switching from a series mode to a direct drive mode, determine a target motor speed and a target motor torque of a first motor, and maintain a clutch in a engaged state and an engine in a driving state; and based on the target motor speed and the target motor torque, regulate the first motor so that a transmission satisfies a shift condition; and then, when the transmission satisfies the shift condition, control the transmission to switch to a target gear corresponding to the direct drive mode, so that a vehicle switches from the series mode to the direct drive mode. By regulating a speed and a torque of the first motor, the embodiment of the present disclosure enables a transmission shift operation to be completed without disengaging the clutch or interrupting an engine torque during a mode switching process. Consequently, after the transmission shifts to the target gear, the engine can immediately output torque via the transmission, allowing the vehicle to switch from the series mode to the direct drive mode more quickly and smoothly, thereby effectively improving an overall vehicle power response performance.

The above description is only an overview of technical solutions of the present disclosure. In order to enable a clearer understanding of technical methods of the present disclosure, contents of the specification may be followed for implementation. Furthermore, to make the above and other objectives, features, and advantages of the present disclosure more obvious and understandable, specific embodiments of the present disclosure are hereby set forth in detail below.

### BRIEF DESCRIPTION OF THE DRAWINGS

To more clearly illustrate the technical solutions of the embodiments of the present disclosure, a brief description of accompanying drawings that are required in the embodiments will hereinafter be provided. Obviously, the accompanying drawings described below are only some embodiments of the present disclosure. For those skilled in the art, they can obtain other drawings based on these accompanying drawings without creative labour.
FIG. 1 is a schematic structural diagram of a hybrid electric vehicle according to an embodiment of the present disclosure.
FIG. 2 is a flowchart of steps of a mode switching method according to an embodiment of the present disclosure.
FIG. 3 is a schematic diagram of functional modules of a mode switching apparatus according to an embodiment of the present disclosure.
FIG. 4 is a schematic structural diagram of a mode switching system according to an embodiment of the present disclosure.
FIG. 5 is a schematic structural diagram of a vehicle according to an embodiment of the present disclosure.

### DETAILED DESCRIPTION OF THE EMBODIMENTS

The technical solutions in the embodiments of the present disclosure may be clearly and completely described below in conjunction with the accompanying drawings in the embodiments of the present disclosure. Obviously, the described embodiments are only a part of the embodiments of the present disclosure, rather than all of the embodiments.

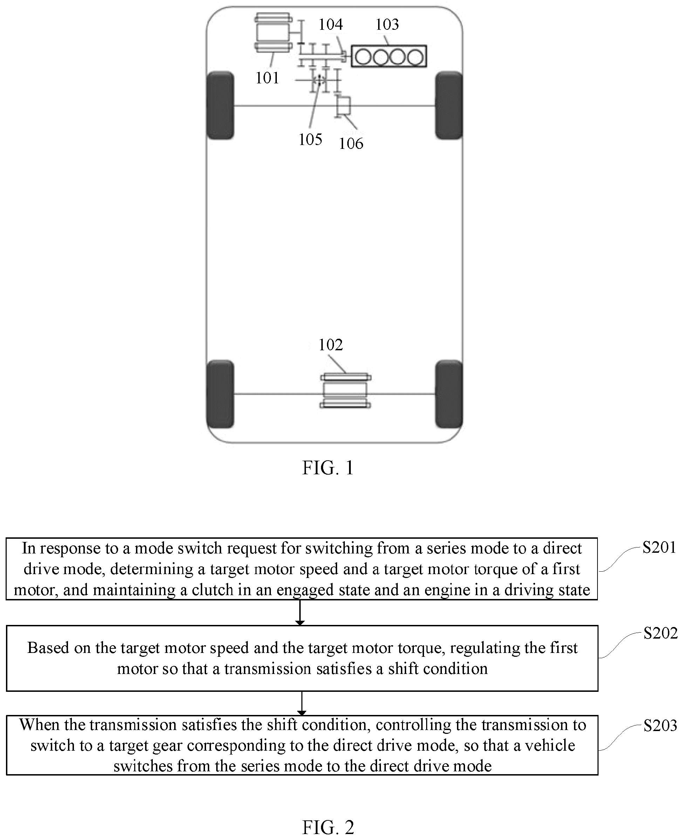

Referring to FIG. 1, FIG. 1 is a schematic structural diagram of a hybrid electric vehicle (HEV) according to an embodiment of the present disclosure. The HEV includes a first motor 101, a second motor 102, an engine 103, a clutch 104, a synchronizer 105, and a differential 106. The First Motor 101 is disposed on a front axle and connected to one end of an input shaft of a transmission, another end of the input shaft is connected to the engine 103 via the clutch 104, the input shaft is connected to an output shaft of the transmission via a gear set, and the output shaft is connected to a transmission gear meshing with the differential 106. The synchronizer 105 is connected to the gear set for synchronising gear speeds between different gears. The second motor 102 is disposed on a rear axle for providing power to rear wheels via a rear drive shaft to drive the HEV.

The HEV adopting the above architecture is simultaneously equipped with the first motor 101, the second motor 102, and the engine 103. Therefore, to adapt to different road conditions and driving demands, HEVs are typically equipped with multiple driving modes, including a series mode and a direct drive mode. In the Series Mode, the engine 103 runs, the clutch 104 is engaged, c the first motor 101 generates electricity, and the second motor 102 drives the HEV. Thus, the engine 103 may drive the first motor 101 to generate electricity, and generated electrical energy may be supplied to the second motor 102, driving the HEV. In the direct drive mode, the clutch 104 is engaged, the synchronizer 105 is engaged in a gear, the engine 103 and the first motor 101 jointly drive the front axle, and the second motor 102 drives the rear axle.

In the related art, when a driver depresses an accelerator pedal deeply for acceleration, the HEV switches from the series mode to the direct drive mode. However, in a conventional mode switching strategy, the HEV first disengages the clutch 104 and controls the transmission to shift to a target gear corresponding to the direct drive mode. Then, the HEV performs torque reduction and speed regulation operations on the engine 101 to enable a speed difference across the clutch 104 to satisfy a clutch engagement condition, and then re-engages the clutch 104. After the Clutch 104 is re-engaged, the engine 101 still requires a certain amount of time to recover torque, making the engine unable to respond promptly to a power demand of a driver.

In the conventional mode switching strategy, due to requirements to control the disengagement and re-engagement of the clutch and the torque reduction of the engine, the above-mentioned method not only results in a longer switching chain and a longer mode switching time but also suffers from engine power interruption and delayed power response, thereby affecting a driving experience of the driver.

To address the problem of poor overall vehicle power response performance during the switching process from series mode to direct drive mode in current HEVs, the present disclosure aims to provide a mode switching method, apparatus, system, and vehicle. By regulating a speed and a torque of the first motor, the present disclosure enables a transmission shift operation to be completed without disengaging the clutch or interrupting an engine torque during a mode switching process. Consequently, after the transmission shifts to the target gear, the engine can immediately output torque via the transmission, allowing the vehicle to switch from the series mode to the direct drive mode more quickly and smoothly, thereby effectively improving an overall vehicle power response performance.

Referring to FIG. 2, a mode switching method according to the present disclosure is shown, applied to an HEV adopting the above architecture. The mode switching method may include the following steps.

Step S201, in response to a mode switch request for switching from a series mode to a direct drive mode, determining a target motor speed and a target motor torque of a first motor, and maintaining a clutch in an engaged state and an engine in a driving state.

An execution subject of the embodiment may be a computing service device with data processing, network communication, and program running functions, or an electronic device with the above functions, such as a driving computer, an onboard computer, an Electronic Control Unit (ECU), a Body Control Module (BCM), or a Vehicle Control Unit (VCU). The embodiment may take the VCU as the execution subject for explanation. The embodiment does not impose specific limitations on the execution subject of the HEV.

In the embodiment, the VCU may monitor an accelerator pedal signal to determine whether a driver triggers the mode switch request. In a specific implementation, the accelerator pedal signal may include an accelerator pedal opening degree and an accelerator pedal change rate. Thus, if the VCU detects that a current driving mode of the HEV is the series mode, the accelerator pedal opening degree is greater than an opening degree threshold, and the accelerator pedal change rate is greater than a change rate threshold, the VCU determines that the driver has triggered a mode switch request for switching from the series mode to the direct drive mode. Then, in response to the mode switch request, the VCU determine the target motor speed and the target motor torque of the first motor, and maintains the clutch in the engaged state and the engine in the driving state.

In a specific implementation, the VCU may, in response to the mode switch request, send a clutch state hold request to the transmission control unit, so that the transmission control unit, in response to the clutch state hold request, maintains the clutch in the engaged state. And the VCU sends an engine state hold request to the engine control unit, so that the engine control unit, in response to the engine state hold request, maintains the engine in a driving state.

In the embodiment, the VCU may also send a gear signal including a target gear corresponding to the direct drive mode to the transmission control unit, so that the transmission control unit obtains the target gear and shifts to the target gear when a transmission satisfies a shift condition.

Since the first motor is connected to the input shaft, a current motor speed of the First Motor is a current input shaft speed of an input shaft, meaning the target motor speed represents the speed enabling the transmission to engage the target gear. When the clutch is engaged, the first motor is rigidly connected to the engine. And torques of the first motor and the engine are simultaneously applied to the input shaft. When torques output by the first motor and the engine are equal in magnitude and opposite in direction, a torque superimposed on the input shaft is zero. That is, the target motor torque is a torque used to balance a current engine torque.

Step S202, based on the target motor speed and the target motor torque, regulating the first motor so that a transmission satisfies a shift condition.

In the embodiment, since the first motor is sequentially connected to the engine via the input shaft and the clutch, speed regulation of the input shaft may be achieved by performing speed regulation on the first motor. And by performing torque regulation on the first motor, a torque superimposed on the input shaft by the engine and the first motor may be effectively balanced, thereby achieving torque regulation of the input shaft. Thus, by regulating the first motor, the transmission may meet the shift condition without disengaging the clutch and without reducing the engine torque.

In a specific implementation, the VCU may send a motor control request including the target motor speed and the target motor torque to the motor control unit, thereby enabling the motor control unit, in response to the motor control request, based on the target motor speed and the target motor torque, to regulate the first motor so that a transmission satisfies a shift condition.

In the embodiment, during a process of the motor control unit regulating speed and torque of the first motor, the VCU may obtain in real time a motor operating state of the first motor returned by the motor control unit, and then determine, based on the motor operating state, whether the transmission satisfies the shift condition.

In a specific implementation, the motor operating state may include the current motor speed and a current motor torque. Thus, the VCU may determine, based on the current motor speed, whether the first motor has completed speed regulation, and determine, based on the current motor torque, whether the first motor has completed torque regulation. Then, upon detecting that the first motor has completed both speed regulation and torque regulation, determine that the transmission satisfies the shift condition.

Step S203, when the transmission satisfies the shift condition, controlling the transmission to switch to a target gear corresponding to the direct drive mode, so that a vehicle switches from the series mode to the direct drive mode.

In the embodiment, after detecting that the transmission satisfies the shift condition, the VCU may send a gear shift request to the transmission control unit. Such that the transmission control unit, in response to the gear shift request, control the transmission to switch to a target gear corresponding to the direct drive mode, so that the HEV switches from the series mode to the direct drive mode.

In the direct drive mode, the VCU may control the engine, the first motor, and a second motor to jointly drive the HEV according to a torque distribution strategy. Specifically, the torque distribution strategy includes a front axle torque distribution strategy and a rear axle torque output strategy, where the VCU is configured to execute the front axle torque distribution strategy, allocating different output torques to the engine and the first motor to jointly drive the front axle of the HEV. And the VCU is further configured to execute the rear axle torque output strategy, controlling the second motor to output torque to drive the rear axle of the HEV.

By regulating the speed and torque of the first motor, the embodiment of the present disclosure enables the engine to remain in the driving state and the clutch to remain in an engaged state during the mode switching process. Consequently, after the transmission completes a gear shift, the engine may immediately output torque to cooperate with the first motor in driving the front axle. By reducing processes of clutch disengagement and engagement, and engine torque reduction and increase, the HEV may switch from the series mode to the direct drive mode more quickly and smoothly. The avoidance of a driver perception of a power interruption is achieved, while better acceleration performance and faster power response are obtained, thereby effectively enhancing an overall vehicle power response performance and driving experience of the driver.

In a feasible embodiment, the step of determining the target motor speed and the target motor torque of the first motor in S201 may specifically include the following sub-steps.

Step S201-1, determining the target motor speed of the first motor based on a current wheel speed of a target wheel and a gear ratio between the target wheel and a transmission input shaft.

The target wheel represents a wheel located on the same side as the first motor. For example, when the first motor, the engine, and the transmission are arranged on the front axle of the vehicle, the target wheel represents the front axle wheel.

In a specific implementation, the current wheel speed may be determined based on a speed signal collected by a wheel speed sensor, and may be further determined based on a current vehicle speed. For example, the current wheel speed of the target wheel may be determined based on a ratio of the current vehicle speed to a wheel circumference.

In the embodiment, the target motor speed may be calculated based on the current wheel speed and the gear ratio between the target wheel and the transmission input shaft. The gear ratio between the target wheel and the transmission input shaft may be specifically calculated based on a first gear ratio between the target wheel and a transmission output shaft, and a second gear ratio corresponding to the target gear.

In a specific implementation, the target motor speed may be determined according to the following formula.$n = {n}_{0} \times {i}_{1} \times {i}_{2} ;$ where n represents the target motor speed of the first motor, n₀ represents the current wheel speed of the target wheel, i₁ represents the first gear ratio between the target wheel and the transmission output shaft, and i₂ represents the second gear ratio corresponding to the target gear.

The second gear ratio corresponding to the target gear represents the gear ratio between the transmission output shaft and the transmission input shaft when the transmission switches to the target gear.

In the embodiment, by controlling the first motor to output the target motor speed, speed synchronisation between the transmission input shaft and the transmission output shaft may be achieved under the speed regulation of the first motor, thereby enabling the transmission to complete a gear shift operation.

Step S201-2, determining a negative value of a current output torque of the engine as the target motor torque of the first motor.

In the embodiment, to ensure that a negative torque output by the first motor may effectively offset a positive torque output by the engine, after acquiring the current output torque fed back by the engine control unit, the VCU may determine the negative value of the current output torque as the target motor torque. Thus, a torque jointly applied to the transmission input shaft by the engine and the first motor may be balanced to 0 N·m.

In the embodiment, by controlling the first motor to output the target motor torque, a torque of the transmission input shaft may be effectively balanced under the torque regulation of the first motor, preventing the transmission input shaft speed from changing due to a presence of torque, thereby avoiding transmission shift failure or affecting shift quality.

In a feasible embodiment, S202 may specifically include the following sub-steps.

Step S202-1, based on the target motor speed, performing speed regulation on the current motor speed of the first motor.

In the embodiment, after sending the target motor speed to the motor control unit, the VCU may exit the proportional-integral (PI) speed loop of the series mode and control the motor control unit to activate the PI speed loop of the speed regulation, so that the motor control unit controls the current motor speed of the first motor to follow the target motor speed via closed-loop control.

In a specific implementation, a PI regulation strategy may be used to achieve closed-loop control of a motor speed. Specifically, the motor control unit includes a built-in proportional controller and a built-in integral controller. The motor control unit may first calculate the first speed difference between the target motor speed and the current motor speed, then input the current motor speed and the first speed difference into the proportional controller to obtain a proportional regulation value; input the current motor speed and the first speed difference into the integral controller to obtain an integral regulation value; and then perform speed regulation on the first motor based on the proportional regulation value and the integral regulation value.

In the embodiment, by performing closed-loop control on the motor speed, fast and precise control of the current motor speed may be achieved.

In the embodiment, as the speed regulation progresses, the current motor speed may continuously approach the target motor speed, and the first speed difference may also continuously decrease. When the motor control unit detects that the first speed difference is less than the first speed threshold, the current motor speed satisfies the torque regulation condition is determined. The first speed threshold may be 100 rpm.

In the embodiment, the motor control unit may further feed back the first speed difference to the VCU in real time, so that the VCU may monitor a speed regulation status of the first motor in real time.

Step S202-2, when the current motor speed satisfies a torque regulation condition, based on the target motor torque, performing torque regulation on a current motor torque of the first motor, so that the transmission satisfies the shift condition.

In the embodiment, after the first motor completes the speed regulation, the motor control unit may be controlled to exit the PI speed loop of the speed regulation and activate a torque control mode of the motor control unit, so that the motor control unit regulates the current motor torque of the first motor to the target motor torque.

In a specific implementation, the current motor torque of the first motor may be gradually increased according to a torque ramp rate until the transmission satisfies the shift condition. The torque ramp rate represents a change amount of the current motor torque of the first motor per unit time.

In the embodiment, the VCU may obtain the current motor torque fed back by the motor control unit in real time and calculate the absolute value of a sum of the current motor torque and the current output torque of the engine. And when the VCU detects that the first speed difference is less than the second speed threshold, the VCU triggers timing for a duration with the first speed difference remaining less than the second speed threshold. Further, when the VCU detects that the absolute value is less than a torque threshold, that the first speed difference is less than the second speed threshold, and that the duration is greater than a time threshold, then the VCU determines that the transmission satisfies the shift condition.

Considering that after the motor control unit exits the PI speed loop of the speed regulation, the current motor speed of the first motor may still continue to reduce a gap with the target motor speed due to inertia. Thus, the second speed threshold may be smaller than the first speed threshold, for example, the second speed threshold may be 50 rpm, while the time threshold may be 50 ms. Thus, under a premise of ensuring that the transmission satisfies the shift condition, a speed regulation time of the first motor may be shortened, thereby improving shift efficiency.

In the embodiment, detection of the absolute value ensures that a torque of the transmission input shaft is maintained within a small torque threshold. Continuous monitoring of the duration ensures that a speed of the transmission input shaft is stably maintained within an allowable fluctuation range. Thus, from torque and speed aspects, the transmission is ensured to complete the gear shift without disengaging the clutch and without interrupting the engine torque.

In a feasible implementation, the step of based on the target motor torque, performing torque regulation on the current motor torque of the first motor in S202-2, may specifically include the following sub-steps.

Step S202-2-1, based on a fluctuation amplitude of the current output torque of the engine, performing real-time correction on the target motor torque to obtain a corrected target motor torque.

In the embodiment, unlike the motor enabling fast and precise torque control, a torque magnitude and a torque response time of the engine are affected by many factors such as fuel injection quantity and injection speed, precise control of the engine torque is difficult to achieve, and thus, torque fluctuations are prone to occur. Therefore, to avoid inaccurate target motor torque of the first motor caused by engine torque fluctuations, during the process of controlling the first motor for torque regulation, the VCU may obtain the current output torque of the engine fed back by the engine control unit in real time. When detecting that the fluctuation amplitude of the current output torque of the engine exceeds a fluctuation threshold, the VCU perform real-time correction on the target motor torque, and resends the corrected target motor torque to the motor control unit.

The fluctuation threshold represents a maximum allowable fluctuation of the current output torque of the engine. For example, when the fluctuation threshold is 2 N·m, an allowed fluctuation range of the current output torque is [-2, 2]. That is, when the VCU detects that a torque increase amplitude or a torque decrease amplitude of the current output torque is greater than 2 N·m, a correction of the target motor torque may be triggered.

Step S202-2-2, based on the corrected target motor torque, performing torque regulation on the current motor torque of the first motor.

In the embodiment, after receiving the corrected target motor torque, the motor control unit may perform further torque regulation on the current motor torque of the first motor based on the corrected target motor torque, to ensure that the current motor torque of the first motor follows the current output torque of the engine in real time.

In a feasible embodiment, the mode switching method may specifically include the following sub-steps.

Step S204, when the first speed difference is less than the first speed threshold, controlling the transmission to perform a synchronizer pre-synchronisation operation to move a shift fork of a synchronizer to a target shift fork position.

The shift fork is a main component in a transmission shift mechanism, configured to move a synchronizer ring gear, changing input/output speed ratio of the synchronizer to achieve the gear shift. When the synchronizer is in a neutral state, the shift fork is located at the home position, that is, a shift fork start position. By moving left or right, gear shift from first gear to second gear or from second gear to first gear may be achieved.

In the embodiment, the target shift fork position represents a position between the shift fork start position and a shift fork end position corresponding to the target gear. Optionally, the target shift fork position may be a position near the shift fork end position.

In a specific implementation, during a process of monitoring the first speed difference, when the VCU detects that the first speed difference is less than the first speed threshold, the VCU sneds a synchronizer pre-synchronization request to the transmission control unit via the vehicle control unit, so that the transmission control unit, in response to the synchronizer pre-synchronization request, controls the shift fork of the synchronizer to move to the target shift fork position.

In the embodiment, by moving the shift fork of the synchronizer to the target shift fork position in advance, when the transmission satisfies the shift condition, the transmission control unit may, in response to the gear shift request sent by the VCU, quickly engage the synchronizer into the target gear. By increasing a transmission shift speed, the mode switching time from the series mode to the direct drive mode is further shortened, allowing the engine and the first motor to output power through the transmission more quickly.

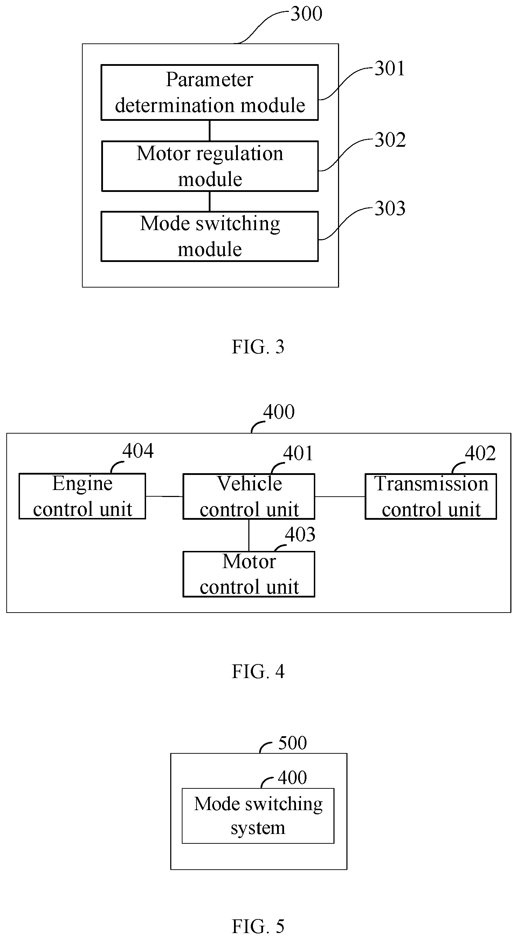

In a second aspect, based on a same inventive concept, refering to FIG. 3, an embodiment of the present disclosure provides a mode switching apparatus 300 including:
a parameter determination module 301, configured to, in response to a mode switch request for switching from a series mode to a direct drive mode, determine a target motor speed and a target motor torque of a first motor, and maintain a clutch in an engaged state and an engine in a driving state; where the first motor is connected to the engine via the clutch;
a motor regulation module 302, configured to, based on the target motor speed and the target motor torque, regulate the first motor so that a transmission satisfies a shift condition; and
a mode switching module 303, configured to, when the transmission satisfies the shift condition, control the transmission to switch to a target gear corresponding to the direct drive mode, so that a vehicle switches from the series mode to the direct drive mode.

In an embodiment of the present disclosure, the parameter determination module 301 includes:
a motor speed determination sub-module, configured to determine the target motor speed of the first motor based on a current wheel speed of a target wheel and a gear ratio between the target wheel and a transmission input shaft; and
a motor torque determination sub-module, configured to determine a negative value of a current output torque of the engine as the target motor torque of the first motor.

In an embodiment of the present disclosure, the motor regulation module 302 includes:
a speed regulation sub-module, configured to, based on the target motor speed, perform speed regulation on a current motor speed of the first motor; and
a torque regulation sub-module, configured to, when the current motor speed satisfies a torque regulation condition, based on the target motor torque, perform torque regulation on a current motor torque of the first motor, so that the transmission satisfies the shift condition.

In an embodiment of the present disclosure, the torque regulation sub-module includes:
a torque correction unit, configured to, based on a fluctuation amplitude of the current output torque of the engine, perform real-time correction on the target motor torque to obtain a corrected target motor torque; and
a torque regulation unit, configured to, based on the corrected target motor torque, perform torque regulation on the current motor torque of the first motor.

In an embodiment of the present disclosure, the mode switching apparatus 300 further includes:
a torque regulation condition determination module, configured to, when a first speed difference between the target motor speed and the current motor speed is less than a first speed threshold, determine that the current motor speed satisfies the torque regulation condition.

In an embodiment of the present disclosure, the mode switching apparatus 300 further includes:
a shift condition determination module, configured to when an absolute value of a sum of the current motor torque and the current output torque of the engine is less than a torque threshold, the first speed difference between the target motor speed and the current motor speed is less than a second speed threshold, and a duration of the first speed difference being less than the second speed threshold is greater than a time threshold, determine that the transmission satisfies the shift condition.

In an embodiment of the present disclosure, the mode switching apparatus 300 further includes:
a synchronizer control module, configured to, when the first speed difference is less than the first speed threshold, control the transmission to perform a synchronizer pre-synchronisation operation to move a shift fork of a synchronizer to a target shift fork position.

The specific implementation of the mode switching apparatus 300 in the embodiment of the present disclosure refers to the specific implementation of the mode switching method provided in the first aspect of the present disclosure, and may not be repeated here.

In a third aspect, based on the same inventive concept, referring to FIG. 4, an embodiment of the present disclosure provides a mode switching system 400, including a vehicle control unit 401, a transmission control unit 402, a motor control unit 403, and an engine control unit 404.

The vehicle control unit 401 is configured to, in response to a mode switch request for switching from a series mode to a direct drive mode, determine a target motor speed and a target motor torque of a first motor, and send a clutch state maintenance request to the transmission control unit 402, and send an engine state maintenance request to the engine control unit 404.

The transmission control unit 402 is configured to, in response to the clutch state maintenance request, maintain a clutch in an engaged state.

The engine control unit 404 is configured to, in response to the engine state maintenance request, maintain an engine in a driving state, where the first motor is connected to the engine via the clutch.

The vehicle control unit 401 is further configured to send a motor control request, including the target motor speed and the target motor torque, to the motor control unit 403.

The motor control unit 403 is configured to, in response to the motor control request, based on the target motor speed and the target motor torque, regulate the first motor so that a transmission satisfies a shift condition;

The vehicle control unit 401 is further configured to, when the transmission satisfies the shift condition, send a gear shift request to the transmission control unit 402; and

The transmission control unit 402 is further configured to, in response to the gear shift request, control the transmission to switch to a target gear corresponding to the direct drive mode, so that a vehicle switches from the series mode to the direct drive mode.

The specific implementation of the mode switching system 400 in the embodiment of the present disclosure refers to the specific implementation of the mode switching method provided in the first aspect of the present disclosure, and may not be repeated here.

In a fourth aspect, based on the same inventive concept, referring to FIG. 5, an embodiment of the present disclosure provides a vehicle 500 including the mode switching system 400 provided in the third aspect of the present disclosure.

The specific implementation of the vehicle 500 in the embodiment of the present disclosure refers to the specific implementation of the mode switching system 400 provided in the third aspect of the present disclosure, and may not be repeated here.

Those skilled in the art may understand that the embodiments of the present disclosure may be provided as a method, an apparatus, or a computer program product. Therefore, the embodiments of the present disclosure may take a form of an entirely hardware embodiment, an entirely software embodiment, or an embodiment combining software and hardware aspects. Furthermore, the embodiments of the present disclosure may take a form of a computer program product implemented on one or more computer-usable storage media (including but not limited to disk storage, CD-ROM, optical storage, or the like) containing computer-usable program code therein.

The embodiments of the present disclosure are described with reference to flowcharts and/or block diagrams of methods, terminal devices (systems), and computer program products according to the embodiments of the present disclosure. Each process and/or block in the flowcharts and/or the block diagrams, and combinations of processes and/or blocks in the flowcharts and/or the block diagrams, may be implemented by computer program instructions. The computer program instructions may be provided to a processor of a general-purpose computer, a special-purpose computer, an embedded processor, or other programmable data processing terminal device to produce a machine, such that the instructions executed by the processor of the computer or other programmable data processing terminal device create c for implementing the functions specified in one or more processes of the flowchart and/or one or more blocks of the block diagram.

The computer program instructions may further be stored in a computer-readable memory that may direct a computer or other programmable data processing terminal device to operate in a specific manner, such that the instructions stored in the computer-readable memory produce an article of manufacture including instruction apparatus, the instruction apparatus implementing the functions specified in one or more processes of the flowchart and/or one or more blocks of the block diagram.

The computer program instructions may further be loaded onto a computer or other programmable data processing terminal device, such that a series of operational steps are executed on the computer or other programmable terminal device to produce a computerimplemented process, thereby providing steps for implementing the functions specified in one or more processes of the flowchart and/or one or more blocks of the block diagram by the instructions executed on the computer or other programmable terminal device.

Although the preferred embodiments of the embodiments of the present disclosure have been described, those skilled in the art, once aware of the basic inventive concept, may make additional changes and modifications to the embodiments. Therefore, the appended claims are intended to be interpreted as including the preferred embodiments and changes and modifications falling within a scope of the embodiments of the present disclosure.

Finally, in the document, relational terms such as first and second are used merely to distinguish one entity or operation from another entity or operation, and do not necessarily require or imply such an actual relationship or order between these entities or operations. And the terms "comprising", "including", or other variants thereof are intended to cover a nonexclusive inclusion, thereby a process, method, article, or terminal device including a series of elements includes not only corresponding elements but also other elements not explicitly listed, or further includes elements inherent to such process, method, article, or terminal device. Without further limitation, an element defined by the phrase "comprising a ..." does not preclude an existence of additional identical elements in the process, method, article, or terminal device that includes the element.

The above provides a detailed introduction to a mode switching method, apparatus and system, and a vehicle provided by the present disclosure. Specific examples are used herein to illustrate principles and implementation methods of the present disclosure. Description of the above embodiments is only used to help understand the method and core concept of the present disclosure. For those skilled in the art, based on concepts of the present disclosure, changes may be made to the specific implementations and the scope of the present disclosure. In summary, content of the specification should not be construed as limiting the present disclosure.

## Claims

1. A mode switching method, comprising:
in response to a mode switch request for switching from a series mode to a direct drive mode, determining a target motor speed and a target motor torque of a first motor, and maintaining a clutch in an engaged state and an engine in a driving state; wherein the first motor is connected to the engine via the clutch;
based on the target motor speed and the target motor torque, regulating the first motor so that a transmission satisfies a shift condition; and
when the transmission satisfies the shift condition, controlling the transmission to switch to a target gear corresponding to the direct drive mode, so that a vehicle switches from the series mode to the direct drive mode.

2. The mode switching method according to claim 1, wherein the step of determining the target motor speed and the target motor torque of the first motor comprises:
determining the target motor speed of the first motor based on a current wheel speed of a target wheel and a gear ratio between the target wheel and a transmission input shaft; and
determining a negative value of a current output torque of the engine as the target motor torque of the first motor.

3. The mode switching method according to claim 2, wherein the step of based on the target motor speed and the target motor torque, regulating the first motor so that the transmission satisfies the shift condition, comprises:
based on the target motor speed, performing speed regulation on a current motor speed of the first motor; and
when the current motor speed satisfies a torque regulation condition, based on the target motor torque, performing torque regulation on a current motor torque of the first motor, so that the transmission satisfies the shift condition.

4. The mode switching method according to claim 3, wherein the step of based on the target motor torque, performing torque regulation on the current motor torque of the first motor comprises:
based on a fluctuation amplitude of the current output torque of the engine, performing real-time correction on the target motor torque to obtain a corrected target motor torque; and
based on the corrected target motor torque, performing torque regulation on the current motor torque of the first motor.

5. The mode switching method according to claim 3, wherein after the step of based on the target motor speed, performing speed regulation on the current motor speed of the first motor, the mode switching method further comprises:
when a first speed difference between the target motor speed and the current motor speed is less than a first speed threshold, determining that the current motor speed satisfies the torque regulation condition.

6. The mode switching method according to claim 3, wherein after the step of based on the target motor torque, performing torque regulation on the current motor torque of the first motor, the mode switching method further comprises:
when an absolute value of a sum of the current motor torque and the current output torque of the engine is less than a torque threshold, the first speed difference between the target motor speed and the current motor speed is less than a second speed threshold, and a duration of the first speed difference being less than the second speed threshold is greater than a time threshold, determining that the transmission satisfies the shift condition.

7. The mode switching method according to claim 5, further comprising:
when the first speed difference is less than the first speed threshold, controlling the transmission to perform a synchronizer pre-synchronisation operation to move a shift fork of a synchronizer to a target shift fork position.

8. The mode switching method according to claim 1, further comprising:
obtaining the mode switch request by monitoring an accelerator pedal signal.

9. The mode switching method according to claim 2, further comprising: determining the target motor speed according to a formula n = n₀×i₁×i₂;
wherein n represents the target motor speed of the first motor, n₀ represents the current wheel speed of the target wheel, i₁ represents a first gear ratio between the target wheel and a transmission output shaft, and i₂ represents a second gear ratio corresponding to the target gear.

10. The mode switching method according to claim 5, wherein the first speed threshold is 100 rpm.

11. The mode switching method according to claim 6, wherein the second speed threshold is 50 rpm.

12. The mode switching method according to claim 6, wherein the time threshold is 50 ms.

13. The mode switching method according to claim 4, wherein the step of based on the fluctuation amplitude of the current output torque of the engine, performing real-time correction on the target motor torque to obtain the corrected target motor torque, comprises:
when detecting that the fluctuation amplitude of the current output torque of the engine exceeds a fluctuation threshold, performing real-time correction on the target motor torque to obtain the corrected target motor torque.

14. The mode switching method according to claim 13, wherein the fluctuation threshold is 2 N·m.

15. The mode switching method according to claim 3, wherein the step of when the current motor speed satisfies the torque regulation condition, based on the target motor torque, performing torque regulation on the current motor torque of the first motor, so that the transmission satisfies the shift condition comprises:
gradually increasing the current motor torque of the first motor according to a torque ramp rate until the transmission satisfies the shift condition, wherein the torque ramp rate represents a change amount of the current motor torque of the first motor per unit time.

16. The mode switching method according to claim 7, wherein the target shift fork position represents a position between a shift fork start position and a shift fork end position corresponding to the target gear.

17. The mode switching method according to claim 7, wherein the target shift fork position is a position near the shift fork end position.

18. The mode switching method according to claim 7, wherein the step of when the first speed difference is less than the first speed threshold, controlling the transmission to perform the synchronizer pre-synchronisation operation to move the shift fork of the synchronizer to the target shift fork position comprises:
when the first speed difference is less than the first speed threshold, sending a synchronizer pre-synchronisation request to a transmission control unit via a vehicle control unit, so that the transmission control unit, in response to the synchronizer pre-synchronisation request, controls the shift fork of the synchronizer to move to the target shift fork position.

19. A mode switching system, comprising a vehicle control unit, a transmission control unit, a motor control unit, and an engine control unit; wherein
the vehicle control unit is configured to, in response to a mode switch request for switching from a series mode to a direct drive mode, determine a target motor speed and a target motor torque of a first motor, and send a clutch state maintenance request to the transmission control unit, and send an engine state maintenance request to the engine control unit;
the transmission control unit is configured to, in response to the clutch state maintenance request, maintain a clutch in an engaged state;
the engine control unit is configured to, in response to the engine state maintenance request, maintain an engine in a driving state; wherein the first motor is connected to the engine via the clutch;
the vehicle control unit is further configured to send a motor control request including the target motor speed and the target motor torque to the motor control unit;
the motor control unit is configured to, in response to the motor control request, based on the target motor speed and the target motor torque, regulate the first motor so that a transmission satisfies a shift condition;
the vehicle control unit is further configured to, when the transmission satisfies the shift condition, send a gear shift request to the transmission control unit; and
the transmission control unit is further configured to, in response to the gear shift request, control the transmission to switch to a target gear corresponding to the direct drive mode, so that a vehicle switches from the series mode to the direct drive mode.

20. A vehicle, comprising the mode switching system according to claim 19.
